# EUROPEAN PATENT APPLICATION

(11) **EP 3 726 058 A1**
(43) Date of publication of application: **21.10.2020**
(21) Application number: 20160788.4
(22) Date of filing: 03.03.2020
(51) Int. Cl.: F04C 18/02

(54) **MOTOR OPERATED COMPRESSOR**

(30) Priority: 19.04.2019 KR 20190046343
(71) Applicant: LG Electronics Inc., 07336 SEOUL (KR)
(72) Inventor: PARK, Taesang, 08592 Seoul (KR); KIM, Bumsuk, 08592 Seoul (KR); LIM, Junyoung, 08592 Seoul (KR); CHOI, Yicheol, 08592 Seoul (KR)
(74) Representative: Vossius & Partner Patentanwälte Rechtsanwälte mbB

(57) **Abstract**

A motor operated compressor according to the present disclosure may include a first scroll supported on a frame; a second scroll provided between the frame and the first scroll to perform an orbiting movement in engagement with the first scroll; a compression chamber provided between the first scroll and the second scroll; a back pressure chamber provided between the frame and the second scroll; a back pressure hole provided in the second scroll to communicate between the compression chamber and the back pressure chamber; and a valve member provided between the compression chamber and the back pressure chamber to move between a first position that opens the back pressure hole and a second position that blocks the back pressure hole. Accordingly, even when both scrolls are in close contact with each other, it may be possible to limit refrigerant in the back pressure chamber from flowing back to the compression chamber while refrigerant in the compression chamber is supplied to the back pressure chamber.

## Description

### BACKGROUND

### 1. Technical Field

The present disclosure relates to a scroll type motor operated compressor.

### 2. Description of the Related Art

In general, compressors for performing the role of compressing refrigerant in automotive air-conditioning systems have been developed in various forms, and in recent years, the development of motor operated compressors electrically driven using a motor have been actively carried out according to the electricization trend of auto parts.

A motor operated compressor mainly employs a scroll compression method suitable for a high compression ratio operation. Such a scroll type motor operated compressor (hereinafter, abbreviated as a motor operated compressor) is provided with an electric motor unit disposed with a rotary motor inside a closed casing, and provided with a compression unit composed of a fixed scroll and an orbiting scroll on one side of the electric motor unit, and the electric motor unit and the compression unit are connected by a rotation shaft to transmit a rotational force of the electric motor unit to the compression unit.

As disclosed in Japanese Patent Application Laid-Open No. 2014-125957, a motor chamber accommodating sucked refrigerant and oil, a discharge chamber accommodating refrigerant and oil discharged from a compression chamber to constitute a type of oil separation space, and a back pressure chamber accommodating mist oil (hereinafter, gas oil) separated from the refrigerant in the discharge chamber to press an orbiting scroll toward a fixed scroll by the pressure of the gas oil are disposed inside a motor operated compressor in the related art. The motor chamber, the discharge chamber and the back pressure chamber are disposed inside a main housing constituting a casing, at a rear housing constituting a casing together with the main housing, and at a main frame coupled to the main housing to support the orbiting scroll in an axial direction, respectively.

In the motor operated compressor in the related art as described above, the back pressure chamber and the support plate are provided between the main frame and the orbiting scroll to bring the orbiting scroll into close contact with the fixed scroll. The back pressure chamber regulates the pressure in the back pressure chamber by allowing part of refrigerant compressed in the compression chamber to flow into the back pressure chamber through a back pressure hole passing through the orbiting wrap of the orbiting scroll.

However, in the motor operated compressor as described above, the pressure of the back pressure chamber may be significantly increased by more than 30 bar compared to the suction pressure of the compression chamber. Then, an elastic force of the support plate may be increased to maintain the pressure of the back pressure chamber. Then, the orbiting scroll may be brought into close contact with the fixed scroll by a high elastic force of the support plate to block the back pressure hole. Then, the back pressure may be reduced while the refrigerant of the compression chamber does not flow into the back pressure chamber, and thus the orbiting scroll may be spaced apart from the fixed scroll. Then, as the axial leakage occurs repeatedly in the compression chamber between the fixed scroll and the orbiting scroll, the compression efficiency may be reduced.

In addition, in the motor operated compressor in the related art, the sealing member constituting the back pressure chamber may be inserted into the orbiting scroll or the main frame, but it may be difficult to obtain a sealing force required when the pressure of the back pressure chamber is excessively increased. In particular, even in the case of high-pressure refrigerant in which the back pressure rises to 60 to 70 bar, such as CO₂ refrigerant, the aforementioned problem may more greatly occur as the behavior of the orbiting scroll becomes unstable because the back pressure chamber is not effectively sealed.

### SUMMARY

An aspect of the present disclosure is to provide a motor operated compressor capable of opening and closing a back pressure path between a compression chamber and a back pressure chamber while the orbiting scroll is in close contact with the fixed scroll.

Furthermore, the present disclosure is to provide a motor operated compressor capable of ensuring refrigerant flow from the compression chamber to the back pressure chamber while the orbiting scroll is in close contact with the fixed scroll, and limiting refrigerant flow from the back pressure chamber to the compression chamber.

Moreover, the present disclosure is to provide a motor operated compressor in which a valve member for opening and closing the back pressure path is provided to communicate between the compression chamber and the back pressure chamber, and a communication passage for communicating between the compression chamber and the back pressure chamber even at a position where the valve member blocks the back pressure path.

In addition, another aspect of the present disclosure is to provide a motor operated compressor capable of implementing the foregoing aspect even when applying high-pressure refrigerant.

In order to achieve the objectives of the present invention, there is provided a motor operated compressor comprising a compression chamber defined by a fixed scroll and an orbital scroll; a back pressure chamber disposed at a side opposite to a side disposed with the compression chamber between both axial sides of the orbiting scroll; a first back pressure path communicating between the compression chamber and the back pressure chamber; a second back pressure path disposed at an compression chamber side end portion between both ends of the first back pressure path; and a valve member provided between the first back pressure path and the second back pressure path to open and close the compression chamber and the back pressure chamber.

Furthermore, in order to achieve the objectives of the present disclosure, there is provided a motor operated compressor comprising a compression chamber defined by a fixed scroll and an orbiting scroll; a back pressure chamber disposed at a side opposite to a side disposed with the compression chamber between both axial sides of the orbiting scroll; a first back pressure path communicating between the compression chamber and the back pressure chamber; a second back pressure path disposed at an compression chamber side end portion between both ends of the first back pressure path; and a valve member provided between the first back pressure path and the second back pressure path to open and close the compression chamber and the back pressure chamber.

Here, wherein the orbiting scroll is provided with an orbiting wrap, and the first back pressure path is disposed to pass through the orbiting wrap in an axial direction, and the second back pressure path is recessed on a front end surface of the orbiting wrap.

In addition, in order to achieve the objectives of the present disclosure, there is provided a motor operated compressor comprising a compression chamber defined by a fixed scroll and an orbiting scroll; a back pressure chamber disposed at a side opposite to a side disposed with the compression chamber between both axial sides of the orbiting scroll; a first back pressure path communicating between the compression chamber and the back pressure chamber; a second back pressure path disposed at an compression chamber side end portion between both ends of the first back pressure path; a third back pressure chamber disposed between the firsts back pressure chamber and the second back pressure chamber; and a valve member provided at the third back pressure path to selectively open and close the first compression chamber, wherein the valve member consists of a plate-shaped valve, and a thickness of the valve member is disposed to have an axial height of opening at least part of the second back pressure path at a position where the valve member opens or closes the first back pressure path.

Here, a fourth back pressure path consisting of a groove or a hole may be disposed in the valve member.

Moreover, in order to achieve the foregoing objectives of the present disclosure, there is provided a motor operated compressor, including a first scroll supported on a frame; a second scroll provided between the frame and the first scroll to perform an orbiting movement in engagement with the first scroll; a compression chamber provided between the first scroll and the second scroll; a back pressure chamber provided between the frame and the second scroll; a back pressure hole provided in the second scroll to communicate between the compression chamber and the back pressure chamber; and a valve member provided between the compression chamber and the back pressure chamber to move between a first position that opens the back pressure hole and a second position that blocks the back pressure hole.

Here, a first wrap may be disposed in the first scroll, and a second wrap may be disposed in the second scroll to define a compression chamber in engagement with the first wrap, and the back pressure hole may be disposed through the second wrap in axial direction, and a back pressure slit that allows the back pressure hole to communicate with the compression chamber while a front end surface of the second wrap is in contact with the first scroll may be disposed in the second wrap.

Furthermore, the back pressure slit may be recessed from the front end surface of the second wrap.

Furthermore, the front end surface of the second wrap may be disposed with a valve receiving groove extending from the back pressure hole, and the back pressure slit may be disposed on a sidewall surface defining the valve receiving groove.

Furthermore, the valve member may be disposed with a plate-shaped valve that moves between a first position and a second position according to a pressure difference between the compression chamber and the back pressure chamber.

Furthermore, a valve receiving groove may be disposed at an end portion of the back pressure hole to receive the valve member, and a thickness of the valve member may be defined to be less than a depth of the valve receiving groove and to be greater than or equal to the minimum distance between the first scroll and the second scroll.

Furthermore, an axial height of the back pressure slit may be defined to be greater than a thickness of the valve member, and a cross-sectional area of a communication portion other than a portion overlapping with the valve member on the back pressure slit may be defined to be less than that of the back pressure hole.

Furthermore, a communication groove or a communication hole may be disposed in the valve member, and the communication groove or the communication hole may be disposed to allow the valve member to communicate with the back pressure hole and the back pressure slit at the second position.

Furthermore, a cross-sectional area of the communication groove or the communication hole may be defined to be less than that of the back pressure slit.

Furthermore, an axial height of the back pressure slit may be disposed to overlap with the back pressure hole in a radial direction.

Furthermore, the valve member may include a check valve inserted into the back pressure hole.

In addition, in order to achieve the foregoing objectives of the present disclosure, there is provided a motor operated compressor, including a frame; a fixed scroll supported on the frame, and provided with a fixed wrap; an orbiting scroll provided between the frame and the fixed scroll, and provided with an orbiting wrap in engagement with the fixed wrap to perform an orbiting movement; a support plate provided between the frame and the orbiting scroll; a compression chamber provided between the fixed wrap and the orbiting wrap; a back pressure chamber provided between the frame and the orbiting scroll; a back pressure path disposed to pass through the orbiting wrap in an axial direction so as to communicate between the compression chamber and the back pressure chamber; and a bypass path disposed at a front end surface of the orbiting wrap to communicate the back pressure path with the compression chamber, and disposed to have a smaller cross-sectional area than that of the back pressure path.

Here, a valve member that selectively opens and closes the back pressure path according to a pressure difference between the compression chamber and the back pressure chamber may be provided between the back pressure path and the bypass path.

Furthermore, a valve receiving groove into which the valve member is inserted may be disposed between the back pressure path and the bypass path, and the valve member may include a plate-shaped valve moving between a first position that opens the back pressure path and a second position that blocks the back pressure path.

Furthermore, the valve member may include a check valve inserted into the back pressure path.

### BRIEF DESCRIPTION OF THE DRAWINGS

FIGS. 1 and 2 are an exploded perspective view and an assembled cross-sectional view showing a motor operated compressor according to the present disclosure.
FIG. 3 is a perspective view showing a back pressure valve separated from an orbiting scroll in a motor operated compressor according to the present disclosure.
FIG. 4 is an assembled cross-sectional view showing the back pressure valve assembled into the orbiting scroll in FIG. 3.
FIG. 5 is a cross-sectional view taken along line "IV-IV" in FIG. 4.
FIG. 6 is a cross-sectional view taken along line "V-V" in FIG. 4.
FIG. 7 is a cross-sectional view showing another embodiment of a back pressure slit according to the present embodiment.
FIGS. 8A and 8B are cross-sectional views shown for explaining the opening and closing operation of a back pressure valve according to the present embodiment.
FIGS. 9A and 9B are a perspective view and a cross-sectional view showing another embodiment of a back pressure path in a motor operated compressor according to the present embodiment.
FIG. 10 is an exploded perspective view showing another embodiment of the back pressure valve according to the present embodiment.
FIG. 11 is an exploded perspective view showing another embodiment of a connection path according to the present embodiment.
FIG. 12 is a cross-sectional view showing another embodiment of the back pressure valve according to the present disclosure.

### DETAILED DESCRIPTION OF THE EMBODIMENTS

Hereinafter, a motor operated compressor according to the present disclosure will be described in detail with reference to an embodiment illustrated in the accompanying drawings.

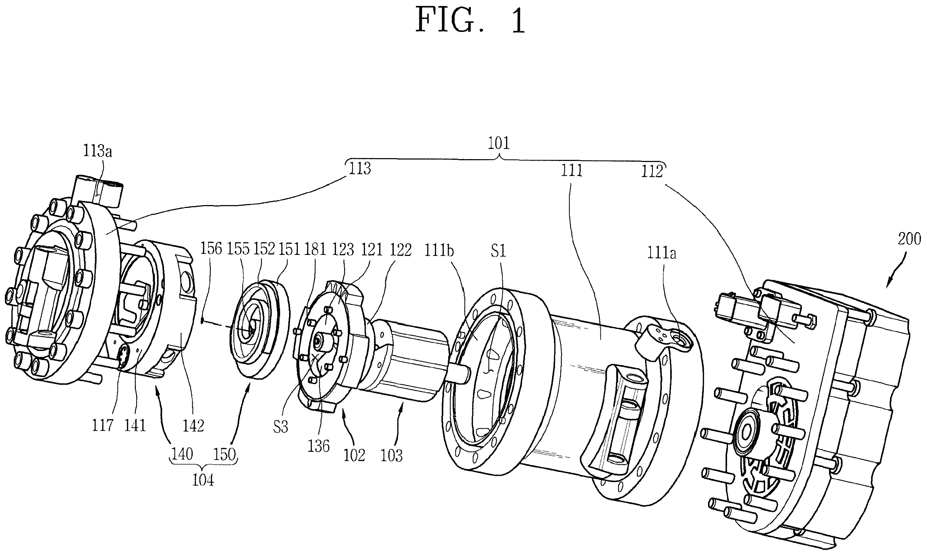

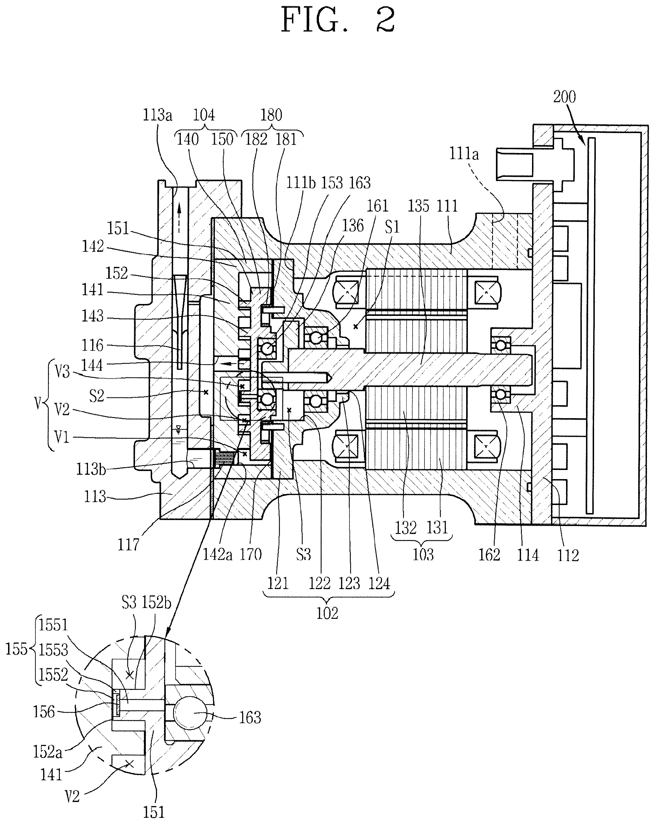

The motor operated compressor according to the present disclosure is a scroll compressor in which two scrolls are engaged to compress refrigerant, as part of a refrigeration cycle apparatus that sucks and compresses refrigerant. The scroll compressor of the present embodiment will be described with a high-temperature, high-pressure motor operated scroll compressor using carbon dioxide (CO₂) refrigerant, at a discharge pressure of 100 bar, more precisely, approximately 130 bar, and a discharge temperature of approximately 170 °C, for example. FIGS. 1 and 2 are an exploded perspective view and an assembled cross-sectional view showing a motor operated compressor according to the present disclosure.

Referring to FIGS. 1 and 2, the motor operated compressor according to the present embodiment may include a casing 101, a main frame 102, a drive unit 103, and a compression unit 104. In addition, an inverter unit 200 for controlling the operation of the compressor may be provide at an outside of the front cover 112 which will be described later. Accordingly, the inverter unit 200 may be located at an opposite side of the compression unit 104 with respect to the drive unit 103. In the following description, the side of the inverter unit is referred to as a front side, and the side of the compression unit opposite thereto is referred to as a rear side.

The casing 101 may include a main housing 111, a front cover 112, and a rear housing 113.

The main housing 111 may be defined in a cylindrical shape in which the front and rear ends thereof are open, and the front cover 112 may be coupled to the front end, and the rear housing 113 to the rear end, respectively. In addition, a motor chamber (S1) constituting a suction space may be disposed inside the main housing 111, and a discharge chamber (S2) together with a first scroll 140, which will be described later, in the rear housing 113, respectively.

The drive unit 103, the frame and the compression unit 104 may be accommodated in the motor chamber (S1), and an oil separation unit 116 that separates oil from refrigerant discharged into the discharge chamber (S2) may be provided in the discharge chamber (S2).

Moreover, an inlet port 111a communicating with the motor chamber (S1) is disposed at a side wall of the main housing 111, and an outlet port 113a communicating with the discharge chamber (S2) at a side wall of the rear housing 113, respectively. The oil separation unit 116 described above may be provided at the outlet port 113a.

In addition, a first oil collection hole 113b for collecting oil separated from the oil separation unit 116 may be disposed at a lower half of the rear housing 113, and a second oil collection hole 142a for guiding gas oil collected through the first oil collection hole 113b into a suction pressure chamber (V1) may be disposed in the first scroll 140. An orifice 117 for depressurizing the gas oil guided to the suction pressure chamber (V1) may be provided at the first oil collection hole 113b or the second oil collection hole 142a. Accordingly, the discharge chamber (S2) communicates with the suction pressure chamber (V1) through the first oil collection hole 113b and the second oil collection hole 142a, and thus a series of processes in which oil separated by the oil separation unit 116 is mixed with gas and collected into the suction pressure chamber (V1) will be repeated. It will be described again later.

On the other hand, the main frame 102 may be disposed with an annular disk-shaped body portion 121, and an edge of the body portion 121 may be supported and coupled between a front surface of a scroll sidewall portion 142 of the first scroll 140 and an inner stepped surface 111b of the main housing 111.

Furthermore, a balance weight receiving space portion (hereinafter, receiving space portion) 122 for receiving a balance weight 136 which will be described later may be disposed at the center of the main frame 102, and the balance weight 136 coupled to a rotation shaft 135 so as to compensate for an imbalance due to an eccentric orbiting movement of a second scroll 150 may be rotatably received into the receiving space portion 122.

In addition, a shaft receiving portion 123 is disposed to protrude toward the front side at the center of a back pressure chamber portion 122, and a shaft hole 124 into which the rotation shaft 135 is rotatably inserted is disposed at the center of the shaft receiving portion 123 to pass therethrough. A main bearing 161 described above is fixedly coupled to an inner circumferential surface of the shaft receiving portion 123, and the inner circumferential surface of the shaft hole 124 is spaced apart from an outer circumferential surface of the rotation shaft 135. Accordingly, a rear side of the receiving space portion 122 may be sealed by a sealing member (not shown), but a front side of the receiving space portion 122 may be opened to communicate with the motor chamber (S1). Of course, the sealing member (not shown) may be provided in the shaft hole 124 to also seal the front side of the receiving space portion 122.

On the other hand, the drive unit 103 includes a stator 131 and the rotor 132 to generate a rotational force for driving the rotation shaft 135. In the present embodiment, the stator 131 may be fixed to an inner circumferential surface of the main housing 111 to have an annular shape so as to define a cylindrical space thereinside. The rotor 132 may be spaced apart from the stator 131 in the inner space of the stator 131. The rotor 132 may be defined in a substantially cylindrical shape, and the rotation shaft 135 may be coupled to the center of the rotor 132. When power is supplied to the drive unit 103, the rotor 132 and the rotation shaft 135 may be rotated together by an interaction between the stator 131 and the rotor 132.

The rotation shaft 135 may be received into the main housing 111 and may be rotatably supported by the main frame 102. A rear side of the rotation shaft 135 may be radially supported by the main bearing 161 mounted on the main frame 102. A deep groove ball bearing in which an inner ring of the main bearing 161 is coupled to the rotation shaft 135, and an outer ring thereof is coupled to the main frame 102, respectively, may be configured to be pressed into the main frame 102.

Moreover, a front end portion of the rotation shaft 135 may be radially supported by a sub-bearing 162 provided at the front cover 112. The sub bearing 162 may be mounted on a shaft support protrusion 114 disposed on an inner surface of the front cover 112. Accordingly, part of an outer circumferential surface of the rotation shaft 135 may be coupled to the rotor 132 to receive a rotational force generated by the drive unit 103

Meanwhile, the compression unit 104 may include a first scroll 140, which is a fixed scroll, and a second scroll 150, which is an orbiting scroll. The second scroll 150 is eccentrically coupled to the rotation shaft 135 coupled to the rotor 132 of the drive unit 103 to define a pair of compression chambers (V) consisting of a suction pressure chamber (V1), an intermediate pressure chamber (V2), and a discharge pressure chamber (V3) along with the first scroll 140 while performing an orbiting movement with respect to the first scroll 140.

The first scroll 140 may be disposed with a fixed end plate portion 141 defined in a disk shape, and a scroll sidewall portion 142 protruding toward the main frame 102 may be disposed at one side surface of the fixed end plate portion 141. The second oil suction hole 142a which will be described later may be disposed at the scroll sidewall portion 142 to radially pass therethrough.

A fixed wrap 143 may be disposed to protrude at the center of the fixed end plate portion 141 to define a pair of two compression chambers (V) in engagement with an orbiting wrap 152 which will be described later, and a suction port (not shown) communicating with the motor chamber (S1) of the casing 101 may be disposed at an edge of the fixed end plate portion 141, and a discharge port 144 communicating from the final compression chamber to the discharge chamber (S2) may be disposed at the center of the fixed end plate portion 141. For convenience of description, since the fixed scroll is defined as a first scroll, the fixed wrap is defined as a first wrap for convenience.

The second scroll 150 is disposed with an orbiting end plate portion 151 defined in a disk shape, and the orbiting wrap 152 protruding toward the fixed end plate portion 141 to engage with the fixed wrap 143 is disposed at a first side of the orbiting end plate portion 151, and a boss groove 153 is disposed at a second side of the orbiting end plate portion 151 to insert and fix an eccentric bearing 163 supporting the rotation shaft 135. Accordingly, the second scroll 150 may be coupled to the rotation shaft 135 with the eccentric bearing 163 and the balance weight 136 interposed therebetween to receive a rotational force. For convenience of description, since the orbiting scroll is defined as a second scroll, the orbiting wrap may be defined as a second wrap.

Meanwhile, a support plate 170 for elastically supporting the second scroll 150 as well as preventing friction may be provided between a rear surface 121a of the frame 102 and a front surface 151a of the second scroll 150 facing the frame 102.

The support plate 170 is made of a thin steel plate material, and an anti-rotation pin 181 press-fitted into the frame 102 is coupled thereto in a penetrating manner. The anti-rotation pin 181 is orbitably coupled to the anti-rotation ring 182 coupled to the front surface 151a of the second scroll 150 to prevent the rotation of the second scroll 150.

The foregoing motor operated compressor according to the present disclosure operates as follows.

In other words, when power is applied to the drive unit 103, the rotation shaft 135 transmits a rotational force to the second scroll 150 while rotating together with the rotor 132 of the drive unit 103. Then, the second scroll 150 connected eccentrically to the rotation shaft 135 performs an orbiting movement by an eccentric distance by the anti-rotation mechanism 180, and a volume of the compression chamber (V) decreases while continuously moving toward the center side in a radial direction of the rotation shaft 135.

Accordingly, refrigerant flows into the motor chamber (S1) through the inlet port 111a to be sucked into the compression chamber (V). At this time, the refrigerant may cool the stator 131 and the rotor 132 while passing through the drive unit 103.

Then, the refrigerant sucked into the compression chamber (V) is compressed while being moved toward the center side along the movement path of the compression chamber (V), and discharged into the discharge chamber (S2) disposed between the first scroll 140 and the rear housing 113 through the discharge port 144.

Oil is separated from the refrigerant discharged into the discharge chamber S2 in the discharge chamber (S2) or an oil component is separated while passing through the oil separation unit 116, and the refrigerant is discharged to the refrigeration cycle through the outlet port 113a. On the other hand, the separated oil remains in the discharge chamber (S2) as a mist state of gas oil mixed with a small amount of refrigerant, and a series of processes in which the gas oil is collected into the suction pressure chamber (V1) through the first oil collection hole 113b and the second oil collection hole 142a described above, and then sucked back into the intermediate pressure chamber (V2) together with the sucked refrigerant sucked to be compressed, and discharged through the discharge pressure chamber (V3) will be repeated.

On the other hand, the pressure of the back pressure chamber, that is, the back pressure must be maintained at an appropriate pressure to stably maintain the behavior of the second scroll, which is the orbiting scroll. If the back pressure is too small compared to the pressure of the compression chamber, a supporting force for the second scroll, which is an orbiting scroll, may be weakened to reduce an adhesion force to the first scroll, which is a fixed scroll, and as a result, leakage in the compression chamber may occur, thereby increasing compression loss. On the other hand, if the back pressure is too large compared to the pressure of the compression chamber, the second scroll may perform an orbiting movement in an excessively close contact with the first scroll, thereby increasing friction loss.

In particular, when CO₂ refrigerant is applied, the pressure of the back pressure chamber is about 60 to 70 bar to define higher back pressure than when other refrigerants (134a, 410a, etc.) are applied, and thus an elastic force of the support plate sealing the back pressure chamber is set to high. As a result, the orbiting scroll may be brought into close contact with the fixed scroll while excessively floating by the support plate, and the back pressure path passing through the orbiting wrap may be blocked, thereby limiting refrigerant from flowing from the compression chamber to the back pressure chamber.

Thus, in the present embodiment, a bypass path for communicating a back pressure path for guiding the refrigerant of the compression chamber to the back pressure chamber with the compression chamber may be provided. As the compression chamber communicates with the back pressure chamber even when the orbiting scroll is brought into close contact with the fixed scroll through the bypass path, the pressure of the back pressure chamber may be maintained constant.

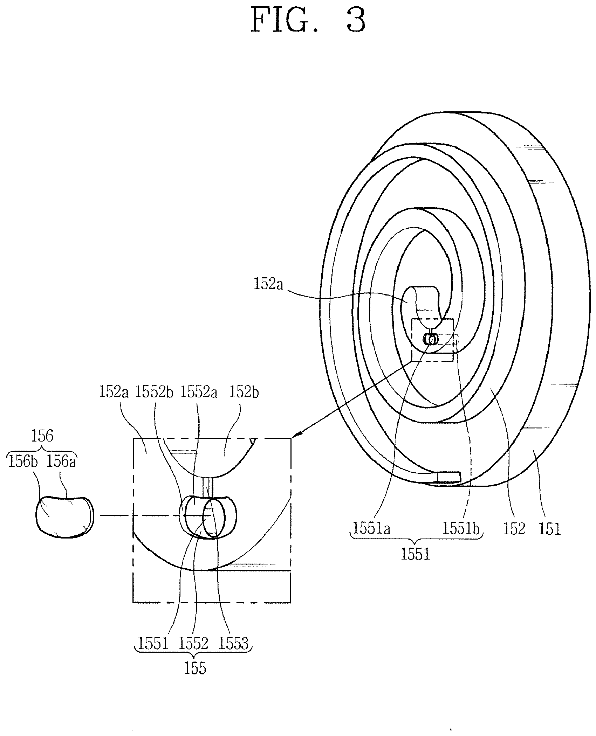

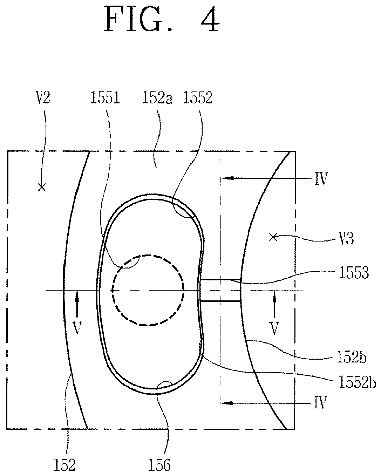

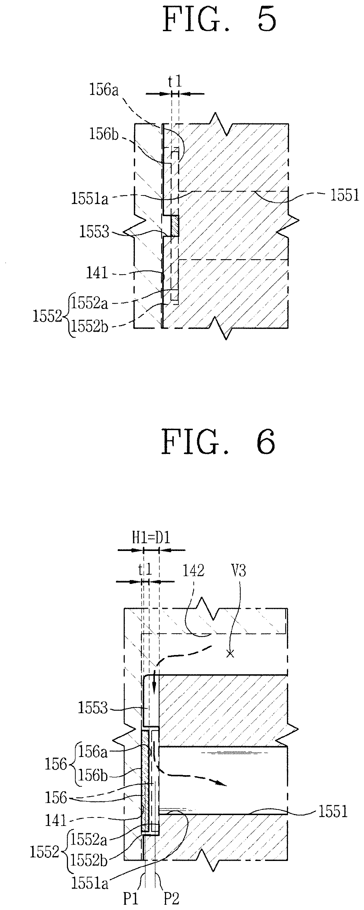

FIG. 3 is a perspective view showing a back pressure valve separated from an orbiting scroll in a motor operated compressor according to the present disclosure, and FIG. 4 is an assembled cross-sectional view showing the back pressure valve assembled into the orbiting scroll in FIG. 3, and FIG. 5 is a cross-sectional view taken along line "IV-IV" in FIG. 4, and FIG. 6 is a cross-sectional view taken along line "V-V" in FIG. 4.

Referring to these drawings, in the motor operated compressor according to the present embodiment, the back pressure path 155 for communicating between the compression chamber (V) and the back pressure chamber (S3) is disposed in the orbiting wrap 152 of the orbiting scroll which is the second scroll 150. For example, the back pressure path 155 includes a back pressure hole 1551, a valve receiving groove 1552, and a back pressure slit 1553.

The back pressure hole 1551 defines a main path that communicates the compression chamber (V) with the back pressure chamber (S3). An inner diameter of the back pressure hole 1551 is defined substantially the same from a first end 1551 a to a second end 1551a constituting both ends thereof, and extends in an axial direction. The inner diameter of the back pressure hole 1551 is defined to be smaller than a wrap thickness of the orbiting wrap 152.

The first end of the back pressure hole 1551 passes therethrough toward a front end surface 152a of the orbiting wrap 152 facing the fixed end plate portion 141. However, as the valve receiving groove 1552 is disposed at the first end 1551a of the back pressure hole 1551, the valve receiving groove 1552 does not extend to the front end surface 152a of the orbiting wrap 152. Of course, the valve receiving groove 1552 may not be defined. In this case, the first end 1551a of the back pressure hole 1551 may extend to the front end surface 152a of the orbiting wrap 152 to pass therethrough. In the present embodiment, a case where the valve receiving groove 1552 is disposed at the first end 1551a of the back pressure hole 1551 will be described as an example.

The first end 1551a of the back pressure hole 1551 may be disposed at a position defining the intermediate pressure chamber (V2) between the suction pressure chamber (V1) and the discharge pressure chamber (V3) with respect to the orbiting wrap 152. However, when the CO₂ refrigerant is applied as in the present embodiment, the pressure of the discharge pressure chamber (V3) increases to 100 bar or more. Therefore, it is preferable that the first end 1551a of the back pressure hole 1551 is disposed around the discharge pressure chamber (V3) or the intermediate pressure chamber (V2) adjacent to the discharge pressure chamber because it can actively respond to the back pressure. For example, the first end of the back pressure hole 1551 may be disposed such that the crank angle is located in a range of about 360 degrees from the center of a base circle with respect to the discharge port 144.

The back pressure slit 1553 constituting the foregoing bypass path is disposed at the first end 1551a of the back pressure hole 1551. The back pressure slit 1553 may be defined even when the valve receiving groove 1552 is not defined. When the valve receiving groove 1552 is not defined, the back pressure slit 1553 may be disposed at the first end 1551a of the back pressure hole 1551. However, as described above, the present embodiment will be described based on an example in which the valve receiving groove 1552 is defined, and thus the back pressure slit 1553 is disposed to communicate with the valve receiving groove 1552.

For example, as shown in FIGS. 3 and 4, the valve receiving groove 1552 may be disposed at the first end 1551a of the back pressure hole 1551, and the back pressure slit 1553 may be recessed on a sidewall surface defining an edge of the valve receiving groove 1552. Accordingly, an inner circumferential surface 1552b of the valve receiving groove 1552 and an inner side surface 152b of the orbiting wrap 152 are connected by the back pressure slit 1553, and the compression chamber (V) and the valve receiving groove 1552 are communicated by the back pressure slit 1553.

Referring to FIG. 4, the valve receiving groove 1552 may be disposed to have a larger cross-sectional area than that of the back pressure hole 1551. Accordingly, the valve receiving groove 1552 constitutes a valve receiving space into which the back pressure valve 156 which will be described later is received. The valve receiving groove 1552 is also defined to be smaller than a wrap thickness of the orbiting wrap 152 similarly to the back pressure hole 1551.

The valve receiving groove 1552 may be defined in a perfect circular shape having the same inner diameter. However, the valve receiving groove 1552 may be defined in an elliptical or rectangular shape extending along a formation direction of the orbiting wrap 152 or in an arc shape along a formation direction of the orbiting wrap 152. When the valve receiving groove 1552 is defined in a rectangular or arc shape, the back pressure valve 156 which will be described later may also be defined in a rectangular or arc shape so as to correspond to the shape of the valve receiving groove 1552. Then, the back pressure valve 156 may be limited from running idle at an inside of the valve accommodation groove 1552. This is advantageous in that when the back pressure valve 156 has a communication groove 1561 which will be described later, the communication groove 1561 is maintained in alignment with the back pressure slit 1553.

Referring to FIGS. 5 and 6, the back pressure slit 1553 is recessed in a slit shape having a preset depth and width on a sidewall surface defining the valve receiving groove 1552. For example, the back pressure slit 1553 may be defined in a shape recessed on an edge surface of the valve receiving groove 1552 by a predetermined depth. However, the back pressure slit 1553 does not necessarily have to be defined in a recessed shape at the edge surface of the valve receiving groove 1552. For example, the back pressure slit 1553 may be defined in a hole shape that radially passes through the side wall surface of the valve receiving groove 1552.

Furthermore, a cross-sectional area of the back pressure slit 1553 is defined to be less than or equal to that of the back pressure hole 1551. In detail, the cross-sectional area of the back pressure slit 1553 is preferably defined to be less than that of the back pressure hole 1551. Through this, an open area of the back pressure slit 1553 may be minimized at a closed position of the back pressure valve to suppress refrigerant or oil from flowing back from the back pressure chamber to the compression chamber (V) to the minimum. Therefore, it may be advantageous that the back pressure slit 1553 is defined by at least one-half or less compared to the back pressure hole 1551.

In addition, the height of the back pressure slit 1553 may be defined to be the same or less than the depth of the valve receiving groove 1552. Accordingly, when the pressure of the back pressure chamber (S3) is increased, part of the back pressure slit 1553 is open even when the back pressure valve 156 is pushed toward the fixed scroll 140 to be in close contact with the fixed end plate portion 141, and part of refrigerant and oil in the back pressure chamber (S3) is moved from the back pressure chamber (S3) to the compression chamber (V) through the open back pressure slit 1553. However, since most of the back pressure slit 1553 is blocked by the back pressure valve 156, an open area of the back pressure slit 1553 constituting an actual path of the refrigerant and oil is not large. As a result, an amount of the refrigerant and oil flowing back from the back pressure chamber (S3) to the compression chamber (V) is not large, and thus the pressure of the back pressure chamber (S3) is not greatly changed. In addition, even though the pressure of the compression chamber (V) rises, the amount of refrigerant of the compression chamber (V) leaked into the back pressure chamber (S3) may be reduced, thereby reducing a decrease in compression efficiency due to a dead volume. It will be described again together with the operation of the back pressure valve.

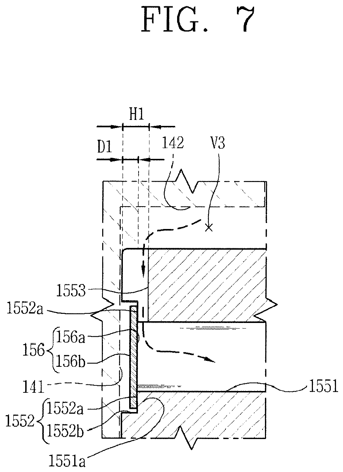

However, a height (H1) of the back pressure slit 1553 may be be defined to be greater than a depth (D1) of the valve receiving groove 1552. In other words, the back pressure slit 1553 may be defined out of the range of the valve receiving groove 1552. FIG. 7 is a plan view showing another embodiment of a stator according to the present embodiment.

Referring to FIG. 7, the back pressure slit 1553 is disposed to have a height (H1) overlapping with the back pressure hole 1551 as well as the valve receiving groove 1552. Accordingly, part of the back pressure slit 1553 is disposed to communicate with the valve receiving groove 1552, and another part of the back pressure slit 1553 to communicate with the back pressure hole 1551, respectively. However, an area where the back pressure slit 1553 overlaps with the back pressure hole 1551 is preferably defined to be less than or equal to that where the back pressure slit 1553 communicates with the valve receiving groove 1552.

As described above, when part of the back pressure slit 1553 is disposed to communicate with the back pressure hole 1551, the back pressure slit 1553 communicates with the back pressure hole 1551 even when the back pressure valve 156 is in close contact with a bottom surface 1552a of the valve receiving groove 1552 constituting the first end 1551a of the back pressure hole 1551. Then, even when the pressure of the compression chamber (V) rises compared to the pressure of the back pressure chamber (S3), the back pressure path 155 may be opened to move the refrigerant and oil of the compression chamber (V) to the back pressure chamber (S3).

On the other hand, for the second end 1551b of the back pressure hole 1551, the boss groove 153 into which the balance weight 136 is inserted eccentrically coupled to the rotation shaft 135 is disposed at a second side of the orbiting end plate portion 151, and an eccentric bearing 163 supporting the balance weight 136 is inserted into and fixed to the boss groove 153. The eccentric bearing 163 may be provided with a ball bearing or a bush bearing, but a predetermined gap is defined between the eccentric bearing 163 or the eccentric bearing and the balance weight. Through this gap, an inside of the boss groove 153 disposed at the center of the orbiting end plate portion 152 communicates with the back pressure chamber (S3). Therefore, the second end 1551b of the back pressure hole 1551 is disposed to communicate with an inside of the boss groove 153.

On the other hand, the back pressure valve 156 having a shape similar to a plane shape of the valve receiving groove 1552 is inserted into the valve receiving groove 1552. The back pressure valve 156 is provided with a plate-shaped valve having both side surfaces, i.e., a first side surface 156a facing the fixed end plate portion 141 and a second side surface 156b opposite to the first side surface 156a.

The back pressure valve 156 moves in an axial direction by a pressure difference imposed on both side surfaces in the valve receiving groove 1552. Therefore, the back pressure valve 156 is defined to be slightly smaller than the valve receiving groove 1552.

In addition, since the back pressure valve 156 needs to open and close the back pressure hole 1551 while moving in an axial direction in the valve receiving groove 1552, a thickness of the back pressure valve 156 is defined to be less than a depth (D1) of the valve receiving groove 1552. For example, the thickness (t1) of the back pressure valve 156 may be defined to be about 1/2 of the depth (D1) of the valve receiving groove 1552. However, the thickness (t1) of the back pressure valve 156 is related to the height (H1) of the back pressure slit 1553. The thickness (t1) of the back pressure valve 156 must be defined to be less than the depth (D1) of the valve receiving groove 1552 when the height (H1) of the back pressure slit 1553 is equal to or less than the depth (D1) of the valve receiving groove 1552, but thickness (t1) of the back pressure valve 156 may be defined to be the same as the depth (D1) of the valve receiving groove 1552 when the height (H1) of the back pressure slit 1553 is greater than the depth (D1) of the valve receiving groove 1552.

However, the thickness (t1) of the back pressure valve 156 must be defined such that the back pressure valve 156 is completely inserted into the valve receiving groove 1552 while the front end surface 152a of the orbiting wrap 152 is in contact with the fixed end plate portion 141, and the back pressure valve 156 is not released from the valve receiving groove 1552 in a state where the front end surface 152a of the orbiting wrap 152 is spaced apart from the fixed end plate portion 141 to the maximum.

In addition, the back pressure valve 156 may be made of a metal material, or may be made of a resin material such as engineering plastic. The back pressure valve 156 may be defined to have a thickness such that the orbiting scroll 150 is not spaced apart from the valve receiving groove 1552 even when the orbiting scroll 150 is spaced farthest from the fixed scroll 140. Therefore, as described above, the thickness (t1) of the back pressure valve 156 may be defined to be less than the depth (D1) of the valve receiving groove 1552, and may be defined to be even less than the height (H1) of the back pressure slit 1553.

Furthermore, as shown in FIGS. 4 through 7, the back pressure valve 156 may be defined in a simple flat plate shape. The back pressure valve 156 may be defined to have an area larger than that of at least the inner diameter of the back pressure hole 1551. Accordingly, when the pressure of the compression chamber (V) is higher than the pressure of the back pressure chamber (S3), the back pressure valve 156 may be in close contact with the valve receiving groove 1552, thereby blocking the back pressure hole 1551. On the contrary, when the pressure of the back pressure chamber (S3) is higher than the pressure of the compression chamber (V), the back pressure valve 156 is spaced apart from a bottom surface 1552a of the valve receiving groove 1552 to open the back pressure hole 1551. At this time, the pressure of the compression chamber (V) is variable. In particular, the pressure of the discharge chamber communicating with the back pressure slit 1553 or the intermediate pressure chamber (V2) adjacent to the discharge chamber changes a volume of the compression chamber (V) while the orbiting scroll 150 performs an orbiting movement, and thus the pressure of the discharge chamber or the intermediate pressure chamber (V2) adjacent to the discharge chamber gradually increases. Therefore, a difference between the pressure of the compression chamber (V) and the pressure of the back pressure chamber (S3) is not the same, and thus the back pressure valve 156 may be slightly detached the bottom surface 1552a of the valve receiving groove 1552. During this process, the pressures of the compression chamber (V) and the back pressure chamber (S3) are properly balanced.

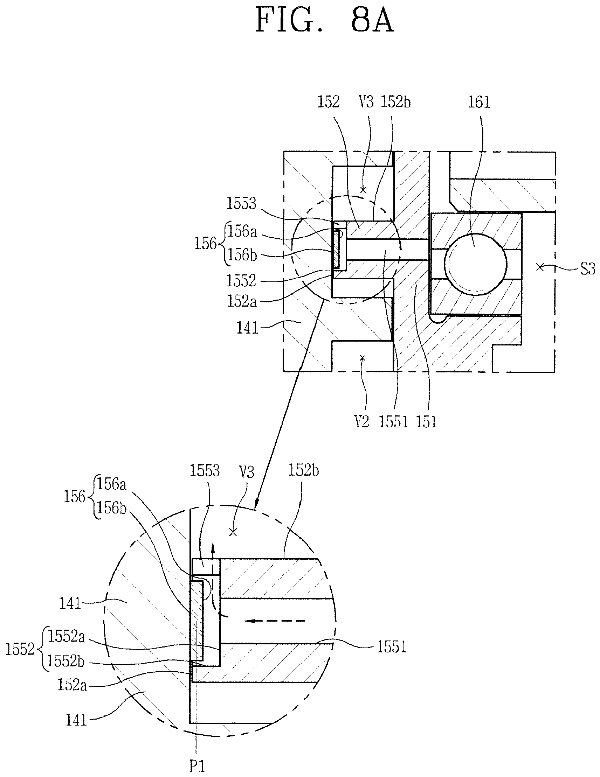

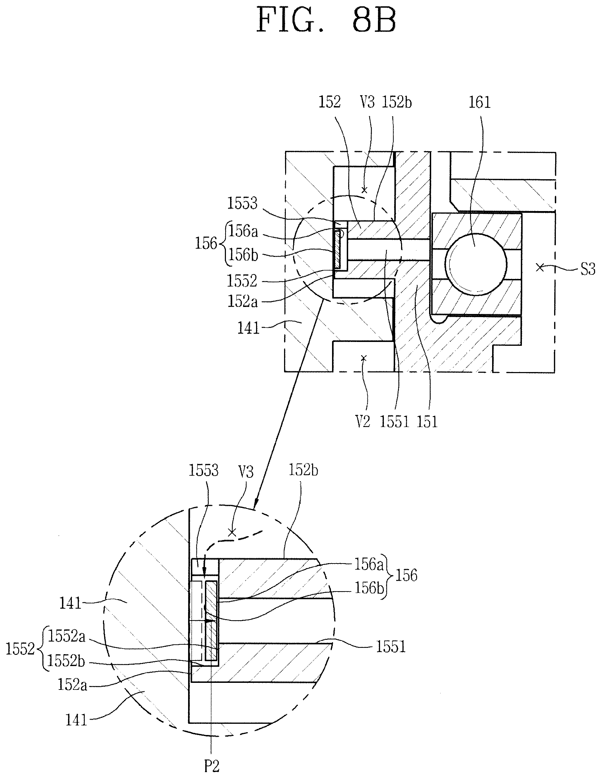

The back pressure valve 156 of the motor operated compressor according to the present embodiment as described above opens and closes the back pressure hole 1551 according to a pressure difference between the compression chamber (V) and the back pressure chamber (S3). FIGS. 8A and 8B are cross-sectional views shown for explaining the opening and closing operation of a back pressure valve according to the present embodiment.

In other words, the pressure of the compression chamber (V) and the pressure of the back pressure chamber (S3) are not large during the initial operation of the compressor. Accordingly, the orbiting scroll 150 is supported toward the fixed scroll 140 by an elastic force of the support plate 170. At this time, the back pressure valve 156 may move between a first position (P1) that opens the back pressure hole 1551 and a second position (P2) that blocks the back pressure hole 1551 as shown in FIG. 6 while maintaining a free state in the valve receiving groove 1552.

However, when the operation of the compressor continues, the pressure of the compression chamber (P) continuously increases. Accordingly, the orbiting scroll 150 is pushed toward the fixed scroll 140 by the pressure of the compression chamber (V). However, refrigerant or oil in the compression chamber (V) moves to the back pressure chamber (S3) through the back pressure hole 1551, and thus the pressure of the back pressure chamber (S3) increases. Then, the orbiting scroll 150 is brought into close contact with the fixed scroll 140 while the orbiting scroll 150 floats toward the fixed scroll 140 by an elastic force of the support plate 170 and a pressure of the back pressure chamber (S3).

Then, the front end surface 152a of the orbiting wrap 152 may be in close contact with the fixed end plate portion 141 to close an inlet of the back pressure path 155 passing through the front end surface 152a of the orbiting wrap 152. However, as the back pressure slit 1553 communicating with the valve receiving groove 1552 is disposed at an inlet side of the back pressure path 155, the back pressure path 155 maintains an open state through the back pressure slit 1553. Then, refrigerant and oil in the compression chamber (V) move to the back pressure chamber (S3) through the back pressure slit 1553, the valve receiving groove 1552, and the back pressure hole 1551 to further increase the pressure of the back pressure chamber (S3). At this time, the back pressure valve 156 at an inlet side of the back pressure passage 155, that is received in the valve receiving groove 1552 may move between the first position (P1) and the second position (P2) because the pressure of the compression chamber (V) and the pressure of the back pressure chamber (S3) have not yet reached a balanced state.

Next, as the pressure of the back pressure chamber (S3) rises to a certain degree, the pressure of the back pressure chamber (S3) and the pressure of the compression chamber (V) are balanced, or the back pressure valve 156 is pushed and moved to the first position (P1) that opens the back pressure hole 1551 when the pressure of the back pressure chamber (S3) further rises. Then, as the back pressure path 155 is opened, refrigerant and oil in the back pressure chamber (S3) may flow back to the compression chamber (V). However, when the back pressure valve 156 is moved to the first position (P1) as shown in FIG. 8A, the back pressure valve 156 blocks part of the back pressure slit 1553. Then, while an opening area of the back pressure slit 1553 is reduced, the amount of refrigerant and oil flowing back from the back pressure chamber (S3) to the compression chamber (V) may be greatly reduced. Then, the amount of refrigerant and oil flowing into the compression chamber (V) from the back pressure chamber (S3) may be reduced to suppress refrigerant in the compression chamber (V) from being over-compressed to increase compression efficiency.

On the other hand, when a volume of the compression chamber (V) is further reduced so that the pressure of the compression chamber (V) becomes higher than the pressure of the back pressure chamber (S3), the back pressure valve 156 is pushed and moved to the second position (P2) that blocks the back pressure hole 1551. Then, as shown in FIG. 8B, the back pressure valve 156 blocks the back pressure hole 1551 while being brought into close contact with the bottom surface 1552a of the valve receiving groove 1552, which is the second position (P2), to prevent refrigerant and oil in the compression chamber (V) from leaking into the back pressure hole 1551. As a result, it may be possible to suppress a dead volume of the compression chamber (V) generated when refrigerant in the compression chamber (V) leaks into the back pressure chamber (S3). Through this, it may be possible to enhance the compression efficiency of the compressor. Then, when the volume of the compression chamber (discharge chamber) (V3) is increased due to the orbiting movement of the orbiting scroll 150, the pressure of the compression chamber (V) is lower than the pressure of the back pressure chamber (S3), and then a series of processes of moving the back pressure valve 156 again to the first position (P1) and moving it again to the second position (P2) in the next compression stroke are repeated. At this time, refrigerant and the oil are actively moved between the compression chamber (V) and the back pressure chamber (S3) according to the opening and closing operation of the back pressure valve 156.

On the other hand, as described above, when the pressure of the compression chamber (V) is higher than that of the back pressure chamber (S3), the back pressure valve 156 is brought into close contact with the bottom surface 1552a of the valve receiving groove 1552 to block the back pressure hole 1551. However, even when the pressure of the back pressure chamber (S3) is lowered, it may occur a case where the back pressure valve 156 is not spaced apart from the valve receiving groove 1552 due to oil viscosity or a low pressure difference. Then, even when the pressure of the back pressure chamber (S3) is lowered, refrigerant or oil in the compression chamber (V) may be blocked by the back pressure valve 156 so as not to move quickly to the back pressure chamber (S3). Then, the orbiting scroll 150 may be spaced apart from the fixed scroll 140 to cause leakage between compression chambers, thereby reducing compression efficiency.

Thus, in the present embodiment, even when the back pressure valve 156 is in contact with the bottom surface 1552a of the valve receiving groove 1552, a connection path may be defined between the compression chamber (V) and the back pressure chamber (S3). However, the connection path may be preferably defined to be smaller than the area of the back pressure path 155 through which the back pressure chamber (S3) communicates with the compression chamber (V) at the first position (P1) where the back pressure valve 156 is opened. When the connection path is defined to be similar to the area of the back pressure path 155, the back pressure valve 156 may not play its role.

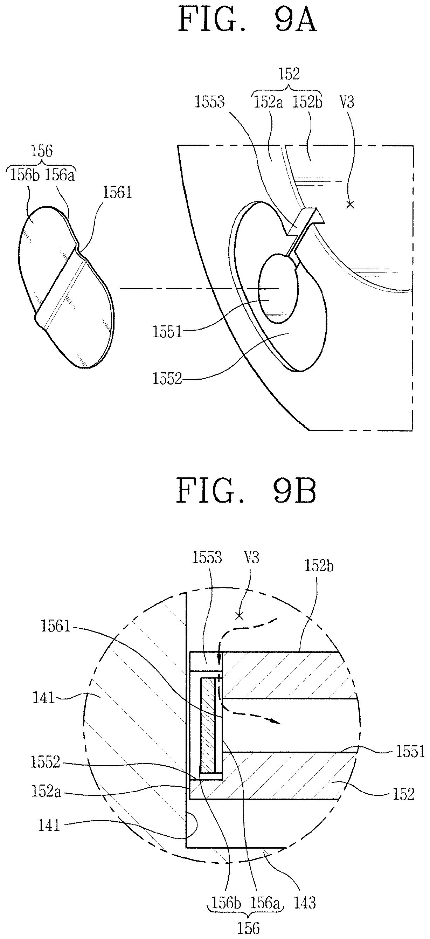

FIGS. 9A and 9B are a perspective view and a cross-sectional view showing another embodiment of a back pressure path in a motor operated compressor according to the present embodiment.

Referring to FIGS. 9A and 9B, the back pressure valve 156 according to the present embodiment may include a plate-shaped valve, and may be disposed with a connection path communicating between the back pressure hole 1551 and the back pressure slit 1553. The connection path may include a communication groove 1561 provided on the second surface 156b of the back pressure valve 156 facing the back pressure hole 1551.

The communication groove 1561 may be disposed to cross the second surface of the back pressure valve 156, or may be disposed to communicate with the outer circumferential surface at least from the center portion. Accordingly, the communication groove 1561 may be defined in an axially recessed shape on a side surface of the back pressure valve 156, or may be defined by bending the back pressure valve 156.

When the communication groove 1561 is disposed in the back pressure valve 156 as described above, the back pressure hole 1551 and the back pressure slit 1553 may communicate with each other through the communication groove 1561 even when the back pressure valve 156 is brought into close contact with the bottom surface of the valve receiving groove 1552. Then, even at the second position where the back pressure valve 156 blocks the back pressure hole 1551, the back pressure path 155 may be open to move part of refrigerant or oil in the compression chamber to the back pressure chamber (S3).

However, a cross-sectional area of the communication groove 1561 is preferably defined to be less than that of the back pressure slit 1553. Accordingly, even when the communication groove 1561 is disposed in the back pressure valve 156, it may be possible to limit refrigerant or oil in the back pressure chamber (S3) from flowing back into the compression chamber (V) to the minimum while the back pressure valve 156 blocks the back pressure hole 1551.

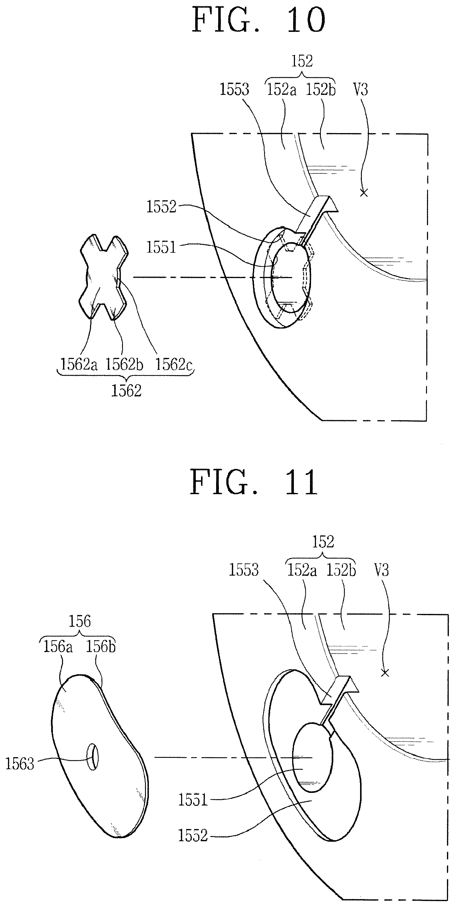

On the other hand, the communication groove 1561 may be disposed on an outer circumferential surface of the back pressure valve 156. FIG. 10 is an exploded perspective view showing another embodiment of the back pressure valve according to the present embodiment.

Referring to FIG. 10, the back pressure valve 156 according to the present embodiment may be disposed with an opening and closing portion 1562a at the center thereof and a plurality of guide portions 1562b at an edge thereof. In other words, the back pressure valve 156 according to the present exemplary embodiment may include an opening and closing portion 1562a disposed at the center thereof, and a plurality of guide portions 1562b protruding in a radial direction on an outer circumferential surface of the opening and closing portion 1562a. Then, empty space portions 1562c constituting the communication grooves, respectively, may be defined in a recessed shape between the guide portions 1562b.

Even when the back pressure valve 156 is applied as described above, the same effects as described above may be expected. However, when the communication grooves are disposed on an outer circumferential surface of the back pressure valve 156 as in the present embodiment, the valve receiving groove 1552 is preferably defined in a shape similar to the back pressure hole 1551.

On the other hand, the connection path according to the present embodiment may be disposed to axially pass through the back pressure valve 156. FIG. 11 is an exploded perspective view showing another embodiment of a connection path according to the present embodiment.

Referring to FIG. 11, the connection path according to the present embodiment may include a communication hole 1563 passing between the first side surface 156a and the second side surface 156b of the back pressure valve 156. Even in this case, a cross-sectional area of the communication hole 1563 may be defined to be less than that of the back pressure slit 1553. The operational effect thereof is substantially the same as those of the above-described embodiment of FIGS. 9A through 10, and thus the description thereof will be omitted. However, as compared to the above-described embodiment of FIGS. 9A through 10, the connection path may be easily processed.

On the other hand, the connection path according to the present embodiment may be disposed in the orbiting scroll. In other words, in the above-described embodiments, the connection path is defined by disposing a groove or a hole in the back pressure valve, but according to the present embodiment, the connection path is defined using a back pressure slit provided in the orbiting scroll.

Referring again to FIG. 7, the valve receiving groove 1552 is disposed at the first end 1551a of the back pressure hole 1551, and the foregoing back pressure slit 1553 is disposed on a sidewall surface of the valve receiving groove 1552. The back pressure slit 1553 may be disposed to pass through an inner side surface 152b of the orbiting wrap 152 to communicate with the discharge chamber or the intermediate pressure chamber (V2) adjacent to the discharge chamber.

In the above-described embodiment, a height (H1) of the back pressure slit 1553 is defined to be less than or equal to a depth (D1) of the valve receiving groove 1552, but in the present embodiment, the height (H1) of the back pressure slit 1553 is defined to be larger than the depth (D1) of the valve receiving groove 1552. Accordingly, an upper end (rear end) of the back pressure slit 1553 extends to a height overlapping with the back pressure hole 1551 in a radial direction through the valve receiving groove 1552.

Then, even when the back pressure valve 156 is brought into close contact with a bottom surface of the valve receiving groove 1552, the back pressure hole 1551 communicates with the compression chamber (V) through the upper end of the back pressure slit 1553, that is, the connection path. Then, refrigerant or oil in the compression chamber (V) moves to the back pressure chamber (S3) through the connection passage of the back pressure slit 1553 and the back pressure hole 1551 even when the orbiting wrap 152 is brought into close contact with the fixed end plate portion 141. The operational effects thereof are the same as those of the embodiments described above.

Meanwhile, another embodiment of the back pressure valve according to the present disclosure will be described as follows.

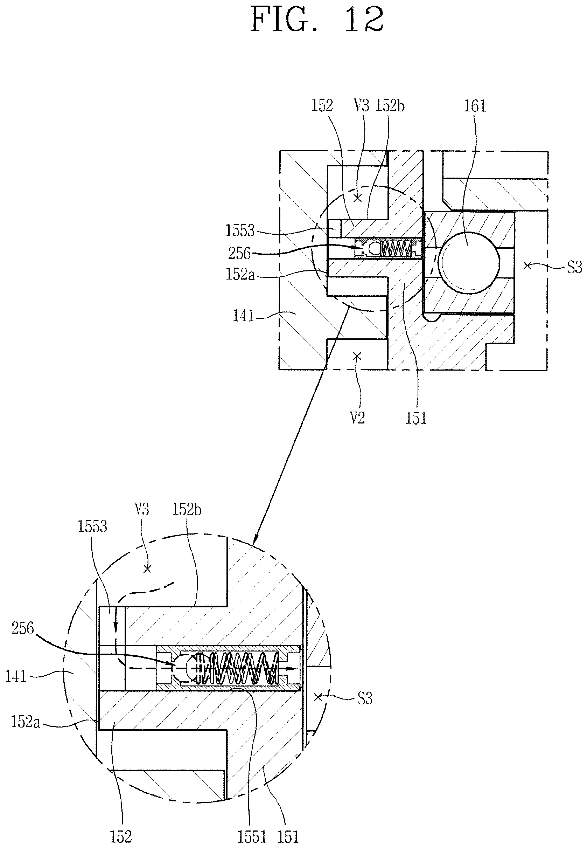

In other words, in the above-described embodiment, the back pressure valve 156 is inserted into the valve receiving groove 1552 provided in the first end 1551a of the back pressure hole 1551 to be defined as a plate-shaped valve for opening and closing the back pressure hole 1551, but the back pressure valve of the present embodiment consists of a check valve including a plurality of parts, such as a ball valve. FIG. 12 is a cross-sectional view showing another embodiment of the back pressure valve according to the present disclosure.

Referring to FIG. 12, a back pressure valve 256 according to the present embodiment may be press-fitted or screw-coupled to the middle of the back pressure hole 1551. Therefore, it is not necessary to define the valve receiving groove 1552 on the front end surface 152a of the orbiting wrap 152 as in the above-described embodiment. However, even in this case, refrigerant or oil in the compression chamber (V) must flow into the back pressure hole 1551 while the orbiting wrap 152 is brought into close contact with the fixed end plate portion 141, and thus the foregoing back pressure slit 1553 may be disposed at the first end 1551a of the back pressure hole 1551 to communicate with the back pressure hole 1551. Of course, the back pressure hole 1551 may be defined instead of the back pressure slit 1553.

Even in this case, a cross-sectional area of the back pressure slit 1553 is preferably defined to be less than that of the back pressure hole 1551 in order to minimize an amount of backflow of the refrigerant or oil.

The operational effect of the back pressure valve 256 is substantially the same as those of the present embodiments as described above, and thus the detailed description thereof will be omitted. However, in the present embodiment, it may be possible to reliably block refrigerant and oil in the back pressure chamber (S3) from flowing back to the compression chamber (V) as well as to allow refrigerant and oil in the compression chamber (V) to move to the back pressure chamber (S3). Accordingly, it may be possible to more effectively suppress a dead volume in the compression chamber as well as to further increase the sealing force.

In this manner, according to the present disclosure, as the pressure of the back pressure chamber is associated with the pressure of the compression chamber, the pressure of the back pressure chamber may be varied in response to a pressure change of the compression chamber, thereby maintaining the required back pressure. Through this, it may be possible to suppress friction loss that may occur when the pressure of the back pressure chamber is higher than the required back pressure as well as to suppress compression loss that may occur when the pressure of the back pressure chamber is lower than the required back pressure.

Furthermore, according to the present disclosure, the back pressure chamber is disposed at an inside of the second scroll, and the back pressure hole 1551 is disposed in the second scroll to allow the back pressure chamber and the compression chamber to communicate with each other. As a result, a length of the back pressure hole 1551 may be shortened to allow the pressure of the back pressure chamber to quickly define the required back pressure. In addition, as the back pressure chamber is provided at an outside of the anti-rotation mechanism to define the back pressure, an area of the back pressure chamber may be enlarged, thereby quickly obtaining the required back pressure even at an intermediate pressure. Moreover, as the main bearing supporting the rotation shaft is provided at an outside of the back pressure chamber, a load on the main bearing may be reduced. Through this, it may be possible to extend the life of the main bearing.

Besides, according to the present disclosure, as the sealing member constituting the back pressure chamber is supported in axial and radial directions by the back pressure hole 1551 communicating with the compression chamber, a sealing force of the sealing member may be improved. As a result, even when high -refrigerant such as CO₂ refrigerant is applied, the back pressure chamber may be effectively sealed, thereby obtaining the required back pressure.

Meanwhile, in the above-described embodiment, the motor operated compressor to which the CO₂ refrigerant is applied has been described, but the present disclosure is not limited thereto.

In a motor operated compressor according to the present disclosure, a back pressure path for communicating between a compression chamber and a back pressure chamber may be provided with a back pressure valve for opening and closing the back pressure path, thereby opening and closing the back pressure path between the compression chamber and the back pressure chamber even when an orbiting scroll is in close contact with a fixed scroll. Through this, it may be possible to limit refrigerant from flowing back to the back pressure chamber, thereby enhancing compression efficiency.

Furthermore, according to the present disclosure, a valve receiving groove may be disposed in the back pressure path, and the back pressure valve may be defined as a plate-shaped valve to open and close the back pressure path while moving by the pressure difference in the valve receiving groove, thereby simplifying the back pressure valve as well as effectively opening and closing the back pressure path. Accordingly, while limiting an increase in manufacturing cost due to the installation of the back pressure valve, it may be possible to limit refrigerant moving from the back pressure chamber to the compression chamber.

In addition, according to the present disclosure, the back pressure valve may be provided with a plate-shaped valve, but also provided with a communication passage communicating from the compression chamber to the back pressure chamber, thereby restrictively allowing refrigerant to flow from the compression chamber to the back pressure chamber or flow from the back pressure chamber to the compression chamber. Through this, it may be possible to quickly increase the pressure of the back pressure chamber while at the same time effectively suppressing refrigerant from leaking from the back pressure chamber to the compression chamber.

Moreover, the present disclosure may be provided with a valve member for opening and closing the back pressure path that communicates between the compression chamber and the back pressure chamber, and provided with a check valve such as a ball valve. Through this, refrigerant in the back pressure chamber may be restricted from flowing back to the compression chamber, thereby enhancing compression efficiency.

Besides, according to the present disclosure, it may be possible to effectively limit refrigerant from flowing back from the back pressure chamber to the compression chamber even when high-pressure refrigerant such as CO₂ refrigerant is applied thereto, thereby enhancing compression efficiency.

The foregoing description is merely embodiments for implementing an electromotive compressor according to the present disclosure, and the present disclosure may not be necessarily limited to the foregoing embodiments, and it will be understood by those skilled in the art that various modifications can be made without departing from the gist of the invention as defined in the following claims.

## Claims

1. A motor operated compressor, comprising:
a first scroll (140) supported on a frame (102);
a second scroll (150) provided between the frame (102) and the first scroll (140) to perform an orbiting movement in engagement with the first scroll (140);
a compression chamber (V, V1, V2, V3) provided between the first scroll (140) and the second scroll (150);
a back pressure chamber (S3) provided between the frame (102) and the second scroll (150);
a back pressure hole (1551) provided in the second scroll (150) to communicate between the compression chamber (V) and the back pressure chamber (S3); and
a valve member (156) provided between the compression chamber (V) and the back pressure chamber (S3) to move between a first position that opens the back pressure hole (1551) and a second position that blocks the back pressure hole (1551).

2. The motor operated compressor of claim 1, wherein a first wrap (143) is disposed in the first scroll (140), and a second wrap (152) is disposed in the second scroll (150) to define a compression chamber (V) in engagement with the first wrap (143), and
the back pressure hole (1551) is disposed through the second wrap (152) in axial direction, and
a back pressure slit (1553) that is configured to allow the back pressure hole (1551) to communicate with the compression chamber (V) while a front end surface (152a) of the second wrap (152) is in contact with the first scroll (140) is disposed in the second wrap (152).

3. The motor operated compressor of claim 2, wherein the back pressure slit (1553) is recessed from the front end surface (152a) of the second wrap (152).

4. The motor operated compressor of claim 2 or 3, wherein the front end surface (152a) of the second wrap (152) is disposed with a valve receiving groove (1552) extending from the back pressure hole (1551), and
the back pressure slit (1553) is disposed on a sidewall surface defining the valve receiving groove (1552).

5. The motor operated compressor of any one of claims 1 to 4, wherein the valve member (156) is disposed with a plate-shaped valve that is configured to move between a first position and a second position according to a pressure difference between the compression chamber (V) and the back pressure chamber (S3).

6. The motor operated compressor of claim 4 or 5, wherein a valve receiving groove (1552) is disposed at an end portion of the back pressure hole (1551) to receive the valve member (156), and
a thickness (t1) of the valve member (156) is defined to be less than a depth (D1) of the valve receiving groove (1552) and to be greater than or equal to the minimum distance between the first scroll (140) and the second scroll (150).

7. The motor operated compressor of any one of claims 2 to 6, wherein an axial height of the back pressure slit (1553) is defined to be greater than a thickness (t1) of the valve member (156), and a cross-sectional area of a communication portion other than a portion overlapping with the valve member (156) on the back pressure slit (1553) is defined to be less than that of the back pressure hole (1551).

8. The motor operated compressor of any one of claims 2 to 7, wherein a communication groove (1561) or a communication hole (1563) is disposed in the valve member (156), and the communication groove (1561) or the communication hole (1563) is disposed to allow the valve member (156) to communicate with the back pressure hole (1551) and the back pressure slit (1553) at the second position.

9. The motor operated compressor of claim 8, wherein a cross-sectional area of the communication groove (1561) or the communication hole (1563) is defined to be less than that of the back pressure slit (1553).

10. The motor operated compressor of any one of claims 2 to 9, wherein an axial height of the back pressure slit (1553) is disposed to overlap with the back pressure hole (1551) in a radial direction.

11. The motor operated compressor of any one of claims 1 to 10, wherein the valve member (156) comprises a check valve inserted into the back pressure hole (1551).

12. The motor operated compressor of claim 2, further comprises a support plate (170) provided between the frame (102) and the second scroll (150), and a bypass path disposed at a front end surface (152a) of the second wrap (152) to communicate the back pressure hole (1551) with the compression chamber (V), and disposed to have a smaller cross-sectional area than that of the back pressure hole (1551).

13. The motor operated compressor of claim 12, wherein the valve member (156) that is configured to selectively open and close the back pressure hole (1551) according to a pressure difference between the compression chamber (V) and the back pressure chamber (S3) is provided between the back pressure hole (1551) and the bypass path.

14. The motor operated compressor of claim 13, wherein a valve receiving groove (1552) into which the valve member (156) is inserted is disposed between the back pressure hole (1551) and the bypass path, and
the valve member (156) comprises a plate-shaped valve configured to move between a first position that opens the back pressure hole (1551) and a second position that blocks the back pressure hole (1551).

15. The motor operated compressor of any of claims 12 to 14, wherein the valve member (156) comprises a check valve inserted into the back pressure hole (1551).
